# EUROPÄISCHE PATENTSCHRIFT

(11) **EP 2 010 791 B1**
(45) Veröffentlichungstag und Bekanntmachung des Hinweises auf die Patenterteilung: **19.06.2013**
(21) Anmeldenummer: 07728310.9
(22) Anmeldetag: 19.04.2007
(51) Int. Cl.: F16C 29/02

(54) **HYDROSTATISCHE PROFILSCHIENENFÜHRUNG**
HYDROSTATIC PROFILE RAIL GUIDE
GUIDE HYDROSTATIQUE DE RAILS PROFILÉS

(30) Priorität: 20.04.2006 DE 102006018312
(43) Veröffentlichungstag der Anmeldung: 07.01.2009
(73) Patentinhaber: Schaeffler Technologies AG & Co. KG, 91074 Herzogenaurach (DE)
(72) Erfinder: RUDY, Dietmar, 66501 Kleinbundenbach (DE)
(86) Internationale Anmeldenummer: PCT/EP2007/053851
(87) Internationale Veröffentlichungsnummer: WO 2007/122180

(56) Entgegenhaltungen:
- WO-A-99/53207
- DE-C1- 3 831 676
- JP-A- 2002 142 433
- US-A- 5 980 110

## Beschreibung

Die vorliegende Erfindung betrifft eine hydrostatische Profilschienenführung, mit einem Führungswagen, der auf einer Führungsschiene hydrostatisch lagerbar ist.

Aus DE 38 31 676 C1 beispielsweise ist eine hydrostatische Profilschienenführung bekannt geworden, bei der ein Führungswagen auf einer Führungsschiene hydrostatisch gelagert ist. Die Führungsschiene ist mit einer entlang ihrer Längsachse erstreckten Mittelfläche und mit zwei zu beiden Längsseiten der Mittelfläche angeordneten oberen Lagerflächen versehen, die geneigt zu dieser Mittelfläche angeordnet sind. Unterhalb jeder oberen Lagerfläche ist eine zu dieser oberen Lagerfläche und zu der Mittelfläche geneigt angeordnete untere Lagerfläche vorgesehen. Im Querschnitt durch die Profilschienenführung gesehen wird ein Dreieck aufgespannt durch eine zu der Mittelfläche der Führungsschiene gedachten ersten parallelen Geraden, durch eine zu der oberen Lagerfläche gedachten zweiten parallelen Geraden und durch eine zu der unteren Lagerfläche gedachten dritten parallelen Geraden. In diesem Dreieck ist ein Winkel a gebildet zwischen der ersten und der zweiten Geraden. In diesem Dreieck ist ferner ein Winkel γ gebildet zwischen der ersten und der dritten Geraden.

Unterhalb dieser beiden im Kopfbereich der Führungsschiene vorgesehenen oberen und unteren Lagerflächen sind im Fußbereich der Führungsschiene zu deren beiden Längsseiten zwei Notlaufflächen vorgesehen, die mit den unteren Lagerflächen des Kopfbereiches einen Winkel β begrenzen, der maximal 90° beträgt.

Der auf die Führungsschiene aufgesetzte Führungswagen ist ebenfalls mit oberen und unteren Lagerflächen versehen, die mit den oberen und unteren Lagerflächen der Führungsschiene zusammenwirken. Zwischen den jeweiligen Lagerflächen der Führungsschiene und des Führungswagens sind Drucktaschen ausgebildet, in denen ein hydrostatischer Druck aufgebaut werden kann. Der hydrostatische Druck ermöglicht eine einwandfreie Lagerung des Führungswagens auf der Führungsschiene.

Üblicherweise ist der Rücken des Führungswagens mit einer Aufspannfläche zum Aufspannen beispielsweise eines Maschinenteils versehen. Das Maschinenteil kann ein Werkzeug sein oder ein beliebiges anderes Bauteil. Diese Maschinenteile haben in der Regel eine ebene Auflagerfläche zur Auflage auf die Aufspannfläche des Rückens.

Die Einsatzmöglichkeiten derartiger hydrostatischer Profilschienenführungen können dadurch beschränkt sein, dass die Schenkel des Führungswagens unter einer anliegenden Last aufbiegen können. In diesem Fall können die in den Drucktaschen aufgebauten Druckpolster unter Umständen nicht aufrecht erhalten werden, sodass ein einwandfreier Betrieb der hydrostatischen Profilschienenführung nicht gewährleistet ist. Derartige Probleme können beispielsweise dadurch behoben werden, dass die äußeren Proportionen des Führungswagens vergrößert werden, sodass die Schenkel des Führungswagens steifer werden. Allerdings sind derartige Veränderungen mit dem Nachteil behaftet, dass ein Austausch von Profilschienenwälzführungen gegen hydrostatische Profilschienenführungen nicht möglich ist. Gemäß DIN 645-1 ist die äußere Geometrie von Profilschienenwälzführungen vorgegeben. Bekannte hydrostatische Profilschienenführungen können nicht als Ersatz für gängige Profilschienenwälzführungen eingesetzt werden, da für die Gewährleistung eines einwandfreien Betriebs bei vergleichbaren Belastungen dieser hydrostatischen Profilschienenführungen eine Veränderung der äußeren Proportionen erforderlich ist, so dass der DIN 645-1 nicht entsprochen ist.

Eine hydrostatische Profilschienenführung nach dem Oberbegriff des Anspruchs 1 ist aus US 5 980 110 A1 bekannt.

Aufgabe der vorliegenden Erfindung ist es, eine hydrostatische Profilschienenführung nach den Merkmalen des Oberbegriffs des Anspruchs 1 anzugeben, bei der ein einwandfreier Betrieb gewährleistet ist.

Erfindungsgemäß wird diese Aufgabe durch die hydrostatische Profilschienenführung gemäß Anspruch 1 gelöst. Die Aufspannfläche ist zu beiden Seiten der Längsmittelachse des Führungswagens mit je einer Aufspannleiste oder Aufspannkante versehen , zwischen denen die Aufspannfläche abgesenkt oder, in Längsrichtung der Führungsschiene gesehen, konkav gewölbt ist. Wenn das Maschinenteil auf diese Aufspannfläche aufgespannt wird, wird es beispielsweise mit Schrauben festgezogen. Unter diesem Festziehen des Maschinenteils kann diese konkav geformte Aufspannfläche eingeebnet werden, wobei unter dieser Einebnung der Rücken an sich um eine zur Längsmittelachse des Führungswagens parallele Biegeachse biegt, wobei die freien Enden der beiden Schenkel etwas aufeinander zuschwenken. Wenn das Maschinentell fest auf die Aufspannfläche des Führungswagens aufgeschraubt ist, kann ein Spaltmaß zwischen der Führungsschiene und dem Führungswagen im Bereich der Lagerflächen sehr klein sein, beispielsweise 5 bis 10 µm. Wird nun allerdings diese hydrostatische Profilschienenführung mit Druck beaufschlagt, beispielsweise 100 bar wirken zwischen den Lagerfläche der Führungsschiene und des Führungswagens Druckkräfte, die ein Aufbiegen der beiden Schenkel des Führungswagens entgegen ihrer Vorspannung zur Folge haben. Unter diesem gegenläufigen Aufbiegen der beiden Schenkel stellt sich nun ein ideales Spaltmaß ein, das beispielsweise 25 µm betragen kann. Das bedeutet, dass unter den vorgesehen Betriebslasten auch bei ungünstiger Beanspruchung der hydrostatischen Profilschienenführung die gewünschten Spaltmaße zwischen den Lagerflächen der Führungsschiene und des Führungswagens eingehalten werden können. Es entstehen keine vergrößerten Spaltmaße, so dass kein unerwünscht hoher Volumenstrom von Hydraulikflüssigkeit eintritt. Dieser vorteilhafter Effekt wird durch die konkav geformte Aufspannfläche des Führungswagens ermöglicht, die eine gezielt elngebrachte Vorspannung in den Rücken des Führungswagens ermöglicht, die einem unerwünschten Aufliegen der Schenkel des Führungswagens entgegenwirkt. Eine definierte Biegung des Rückens um eine entlang der Führungsschiene gedachte Biegeachse ist mit der-erfindungsgemäßen Profilschienenführung möglich.

Wird wie oben beschrieben das Maschinenteil auf den Führungswagen aufgesetzt, ist zwischen der ebenen Auflagerfläche des Maschinenteils und der abgesenkten Aufspannfläche des Rückens ein Abstand ausgebildet. Wird nun wie oben ausgeführt das Maschinenteil mit dem Führungswagen verspannt, wird der Rücken mit seiner Aufspannfläche in Richtung auf die ebene Auflagerfläche des Maschinenteils gezogen. Unter diesem Einebnen der konkaven oder abgesenkten Aufspannfläche des Rückens verschwenken wie oben beschrieben die beiden Schenkel des Führungswagens aufeinander zu.

Vorzugsweise ist der Führungswagen entlang seiner Längsmittelachse mit mehreren hintereinander angeordneten Gewindebohrungen oder aus der Ebene der Aufspannfläche vorstehenden Gewindeschäften versehen, um das Maschinenteil mit dem Führungswagen zu verschrauben. Die an der Schraubverbindung wirkenden Schraubenkräfte greifen mit einem Hebelarm an den beiden Schenkeln des Führungswagens an, der gerade dem Abstand zwischen der Aufspannkante und der Längsmittelachse entspricht.

Für die einwandfreie Auslegung der erfindungsgemäßen hydrostatischen Profilschienenführung kann es zweckmäßig sein, eine erste Ebene E1 zu definieren, in der die beiden Aufspannleisten oder Kanten angeordnet sind. Die abgesenkte Aufspannfläche liegt dann in einer Ebene E2, die beabstandet ist von der Ebene E1. Im Fall einer konkav ausgeformten Aufspannfläche, tangiert diese konkave Aufspannfläche diese Ebene E2. Der Abstand zwischen diesen beiden Ebenen E1 und E2 ist dann so eingestellt, dass dieser Abstand unter einem Aufspannen des Maschinenteils auf den Führungswagen auf Null zurückgeführt wird. Somit kann mit dem eingestellten Abstand h ein Anschlagmaß definiert werden, so dass nach Erreichen dieses Anschlages das Spaltmaß zwischen den Lagerflächen der Führungsschiene und des Führungswagens einen vorgesehenen geringen Abstand aufweisen. Erst nach Beaufschlagung der erfindungsgemäßen hydrostatischen Profilschienenführung mit Druck stellt sich das gewünschte Spaltmaß zwischen diesen Lagerflächen ein.

Nachstehend wird die Erfindung anhand eines in insgesamt fünf Figuren abgebildeten Ausführungsbeispieles erläutert. Es zeigen:
- Figur 1: eine erfindungsgemäße hydrostatische Profilschienenführung in perspektivischer Darstellung,
- Figur 2: einen Querschnitt durch die erfindungsgemäße hydrostatischen Profilschienenführung aus Figur 1,
- Figur 3: einen weiteren Querschnitt durch die erfindungsgemäße Profilschienenführung,
- Figur 4: die erfindungsgemäße Profilschienenführung mit aufgespanntem Maschinenteil, drucklos,
- Figur 5: die erfindungsgemäße Profilschienenführung aus Figur 4, jedoch druckbeaufschlagt, und
- Figur 6: einen Querschnitt durch eine bekannte Profilschienenführung.

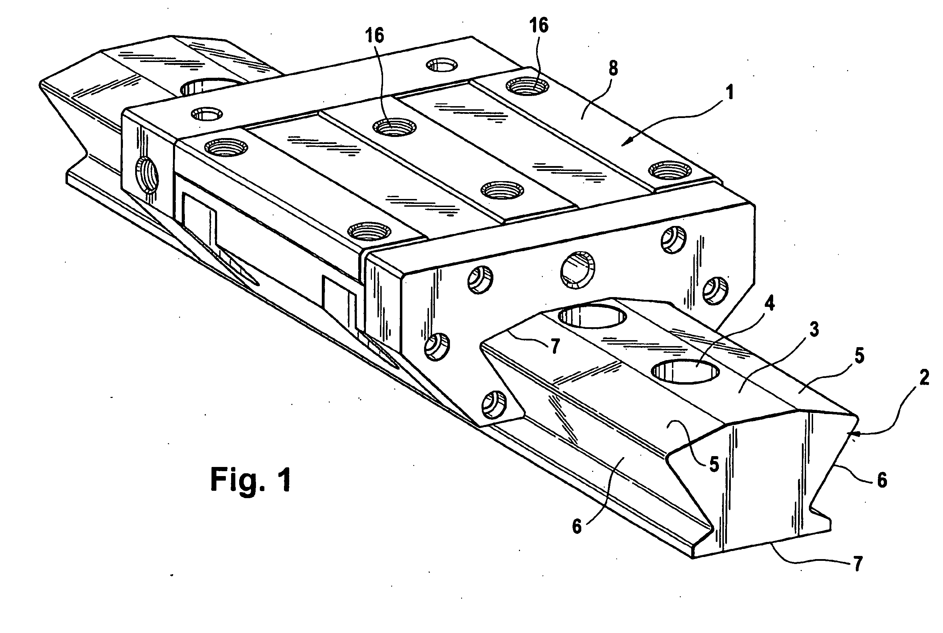

Die in den Figuren 1 bis 5 abgebildete erfindungsgemäße Profilschienenführung umfasst einen Führungswagen 1, der auf einer Führungsschiene 2 hydrostatisch gelagert ist. Die Führungsschiene 2 hat einen Kopfabschnitt der dem Führungswagen 1 zugewandt ist und einen Fußabschnitt, der einem hier nicht abgebildeten Maschinenteil zugewandt ist, auf dem die Führungsschiene 2 befestigt ist. An ihrem Kopfabschnitt ist die Führungsschiene 2 entlang der Längsachse der Profilschienenführung mit einer Mittelfläche 3 versehen. Die Führungsschiene 2 ist mit einer Vielzahl von entlang der Führungsschiene angeordneten Durchgangsöffnungen 4 versehen, durch die hier nicht abgebildete Befestigungsschrauben zum Befestigen der Führungsschiene an dem weiter oben erwähnten Maschinenteil vorgesehen sind. Diese Durchgangsöffnungen 4 durchbrechen die Mittelfläche 3 der Führungsschiene 2.

Die Führungsschiene 1 ist an ihrem Kopfabschnitt mit zwei oberen Lagerflächen 5 und zwei unteren Lagerflächen 6 versehen. Die oberen Lagerflächen 5 sind eben ausgebildet; Sie sind zu der Mittelfläche 3 geneigt angeordnet, wobei die eine obere Lagerfläche 5 zur einen Seite der Mittelfläche 3 und die andere obere Lagerfläche 5 zur anderen Längsseite der Mittelfläche 3 angeordnete ist. Die unteren Lagerflächen 6 sind unterhalb der oberen Lagerflächen 5 angeordnet. Diese unteren Lagerflächen 6 sind sowohl zu der Mittelfläche 3 als auch zu den oberen Lagerflächen 5 geneigt angeordnet.

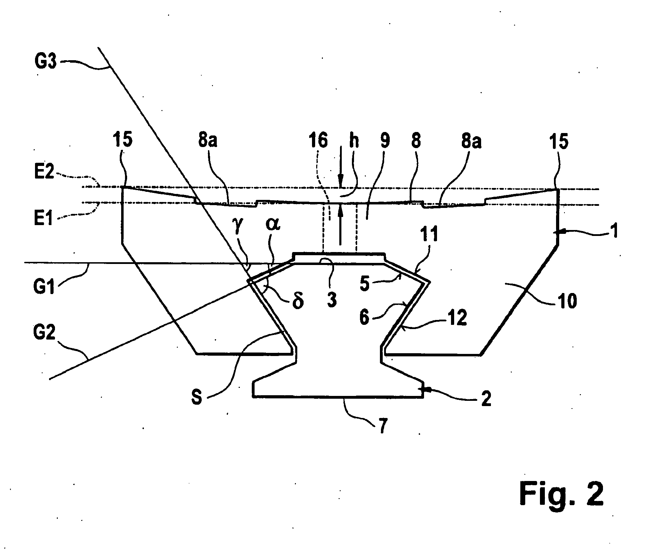

Figur 2 zeigt die erfindungsgemäße hydrostatische Profilschienenführung im Querschnitt. Hier ist zu erkennen, dass die Mittelfläche 3 parallel zu einer Fußfläche 7 der Führungsschiene 2 angeordnet ist, wobei diese Fußfläche 7 die Auflagerfläche der Führungsschiene 2 für das hier nicht abgebildete Maschinenteil ist.

Eine zu der Mittelfläche 3 gedachte erste parallele Gerade G1 und eine zu der oberen Lagerfläche 5 gedachte zweite parallele Gerade G2 und eine zu der unteren Lagerfläche 6 gedachte dritte parallele Gerade G3 spannen ein Dreieck auf. In diesem Dreieck ist ein Winkel α gebildet zwischen der ersten und der zweiten Geraden G1 und G2. Ein Winkel γ ist gebildet zwischen der ersten und der dritten Geraden G1, G3. Der Winkel α ist auf Werte zwischen 10° bis einschließlich 45° und der Winkel γ auf Werte von 20° bis einschließlich 55° eingestellt. Im Schnittpunkt der zweiten und der dritten Geraden G2, G3 ist ein Winkel δ gebildet, der sich rein rechnerisch aus den beiden eingangs erwähnten Winkeln α und y ermitteln lässt. Mit diesen Winkelbereichen ist einerseits eine optimale Kräfteverteilung an der Führungsschiene 2 und an dem Führungswagen 1 eingestellt. Andererseits hat sich herausgestellt, dass bei diesen vorgeschlagenen Winkelbereichen die Proportionen von Führungswagen und Führungsschiene derart eingestellt werden können, dass die Vorgabe der DIN 645-1 eingehalten werden können, wobei die Belastbarkeit der erfindungsgemäßen hydrostatischen Profilschienenführung vergleichbar ist mit einer Profilschienenwälzführung der gleichen Größe.

Der Figur 2 ist ferner zu entnehmen, dass die Gerade G1 in parallelem Abstand zu einer Aufspannfläche 8 des Führungswagens 1 angeordnet ist, wobei auf diese Aufspannfläche 8 beispielsweise Werkzeuge aufgesetzt und an dem Führungswagen 1 befestigt werden können. Diese Aufspannfläche 8 ist erfindungsgemäß konkav gewölbt, wie weiter unten ausführend beschrieben ist.

Weitere Einzelheiten zu dem Führungswagen 1 sind der Figur 2 zu entnehmein: Der Führungswagen 1 weist zwei durch einen Rücken 9 einstückig miteinander verbundene Schenkel 10 auf, die die Führungsschiene 2 umgreifen. Der Rücken 9 ist einerseits an seiner der Führungsschiene 2 zugewandten Seite mit zwei oberen Lagerflächen 11 versehen, die den beiden oberen Lagerflächen 5 der Führungsschiene 2 gegenüberliegend und parallel zu den oberen Lagerflächen 5 der Führungsschiene 2 angeordnet sind. Diese oberen Lagerflächen 11 sind gegenläufig geneigt. Andererseits ist der Rücken 9 mit der bereits erwähnten erfindungsgemäßen Aufspannfläche 8 versehen.

Jeder Schenkel 10 des Führungswagens 1 ist zudem mit einer unteren Lagerfläche 12 versehen, die der unteren Lagerfläche 6 der Führungsschiene 2 gegenüberliegend und parallel dazu angeordnet ist. Die beiden unteren Lagerflächen 12 sind gegenläufig geneigt und jeweils sowohl gegenüber der oberen Lagerfläche 11 als auch gegenüber der Aufspannebene 8 geneigt angeordnet.

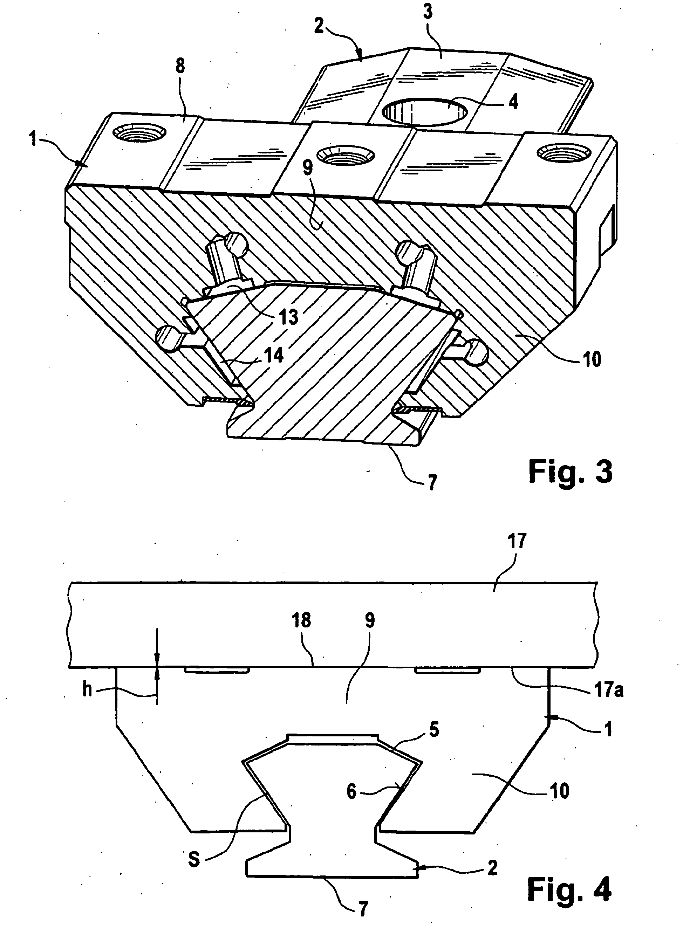

Figur 3 zeigt einen Querschnitt durch die erfindungsgemäße hydrostatische Profilschienenführung, wobei hier die Schnittführung Drucktaschen 13, 14 zeigt, die gebildet sind zwischen den oberen und unteren Lagerflächen 5, 6, 11, 12 des Führungswagens 1 und der Führungsschiene 2. Jede dieser vier Drucktaschen 13, 14 ist mit einem eigenen hier nicht abgebildeten Stromregelventil versehen.

Der Figur 2 kann entnommen werden, dass die Aufspannfläche 8 konkav gewölbt ist. Bei diesem erfindungemäßen Ausführungsbeispiel sind zusätzliche Nuten 8a ausgebildet, die parallel zur Längsmittelachse der hydrostatischen Profilschienenführung ausgebildet sind. Es genügt jedoch, die hier abgebildete konkav geformte Aufspannfläche 8 auch ohne diese Nuten 8a auszubilden.

Die konkave Aufspannfläche 8 tangiert eine Ebene E1. Zu beiden Längsseiten des Führungswagens sind Aufspannkanten 15 gebildet, auf denen ein anzuschraubendes Maschinenteil zunächst zur Anlage kommt. Diese beiden Aufspannkanten 15 liegen in einer Ebene E2, die parallel zur Ebene E1 angeordnet ist. Zwischen diesen beiden Ebenen E1 und E2 ist ein Abstand h ausgebildet.

Entlang der Längsmittelachse der hydrostatischen Profilschienenführung ist der Führungswagen 1 mit mehreren Gewindebohrungen 16 versehen. Figur 1 zeigt diese Gewindebohrungen angedeutet in perspektivischer Darstellung. Der Führungswagen 1 ist so ausgelegt, dass unter einem Verschrauben des hier nicht abgebildeten Maschinenteils mit dem Führungswagen 1 der Rücken 9 in Richtung auf dieses Maschinenteil gebogen wird. Das bedeutet, während des Verschraubens des Maschinenteils mit dem Führungswagen wird der Abstand h zwischen diesen beiden Ebenen E1 und E2 auf Null zurückgeführt. Wenn die Aufspannfläche 8 eingeebnet ist, ist ein Spaltmaß S zwischen den Lagerflächen der Führungsschiene 2 und des Führungswagens 1 im Bereich der unteren Lagerflächen 6 reduziert, denn die beiden Schenkel 10 verschwenken mit ihren freien Enden aufeinander zu, wenn das Maschinenteil mit dem Führungswagen 1 verschraubt wird.

Figur 4 zeigt die erfindungsgemäße hydrostatische Profilschienenführung mit einem angedeuteten Maschinenteil 17, das bereits fest mit dem Führungswagen 1 verschraubt ist. Eine Auflagerfläche 17a des Maschinenteils 17 ist vorgesehen, an der die Aufspannfläche 8 des Führungswagens 1 anliegt. Der Figur ist zu entnehmen, dass der Abstand h zwischen diesen beiden Ebnen E1 und E2 auf Null zurückgeführt worden ist. Der Figur 4 kann ferner entnommen werden, dass im Bereich der freien Schenkelenden im Bereich der unteren Lagerflächen 6 das Spaltmaß S reduziert ist.

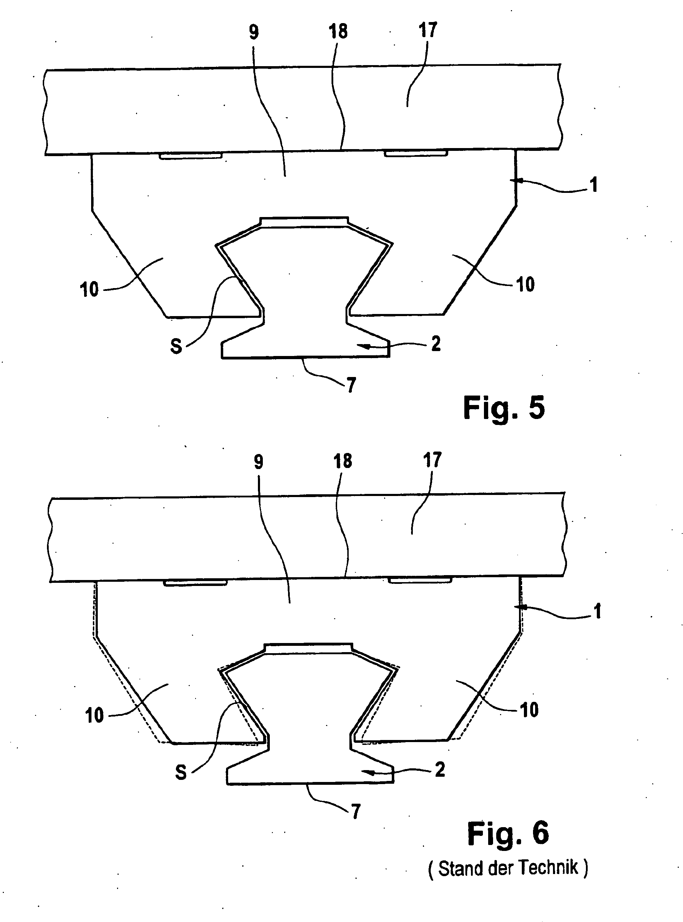

Bei der Darstellung gemäß Figur 5 wurde die erfindungsgemäße Profilschienenführung nach Figur 4 mit Druck beaufschlagt, beispielsweise 100 bar. Der Figur 5 kann nun entnommen werden, dass unter diesem anliegenden Druck im Bereich der unteren Lagerflächen ein ideales Spaltmaß S eingestellt ist, das vorliegend etwa 25 µm beträgt. Die Vergrößerung dieses Spaltmaßes gegenüber dem Spaltmaß gemäß Figur 4 resultiert aus den herrschenden Druckkräften im Lagerspalt, wobei Druckkräfte gegen die Schenkel 10 drücken und diese aufbiegen. Die erfindungsgemäße hydrostatische Profilschienenführung ist so ausgelegt, dass bei Betriebsdrücken und Betriebsbelastungen ein Aufbiegen der beiden Schenkel auf ein zulässiges Spaltmaß S beschränkt ist.

Figur 6 zeigt eine herkömmliche hydrostatische Profilschienenführung, bei der eine Aufspannfläche 18 des Führungswagens 1 lediglich eben ausgeführt ist. Bei fest mit dem Führungswagen 1 verschraubten Maschinenteil 17 stellt sich bei druckloser hydrostatischer Profilschienenführung ein vorgesehenes Spaltmaß S ein, wie es in der Figur 6 angedeutet ist. Wird nun diese herkömmliche hydrostatische Profilschienenführung mit Druck beaufschlagt, werden die beiden Schenkel 10 des Führungswagens 1 voneinander weg gebogen. Das bedeutet, dass Spaltmaß S nimmt zu, was in der Figur 6 durch eine gestrichelte Abbildung des Führungswagens angedeutet ist. Diese Zunahme des Spaltmaßes S kann jedoch in unerwünschter Weise einen unzulässig hohen Volumenstrom an Hydraulikflüssigkeit zur Folge haben.

### Bezugszahlenliste

| | |
|---|---|
| 1 | Führungswagen |
| 2 | Führungsschiene |
| 3 | Mittelfläche |
| 4 | Durchgangsöffnung |
| 5 | obere Lagerfläche |
| 6 | untere Lagerfläche |
| 7 | Fußfläche |
| 8 | Aufspannfläche |
| 8a | Nuten |
| 9 | Rücken |
| 10 | Schenkel |
| 11 | obere Lagerfläche |
| 12 | untere Lagerfläche |
| 13 | Drucktasche |
| 14 | Drucktasche |
| 15 | Aufspannkante |
| 16 | Gewindebohrung |
| 17 | Maschinenteil |
| 18 | Aufspannfläche |

## Patentansprüche

1. Hydrostatische Profilschienenführung, mit einem Führungswagen (1), der auf einer Führungsschiene (2) hydrostatisch lagerbar ist, wobei der Führungswagen einen Rücken (9) und zwei an den Rücken (9) anschließende Schenkel (10) aufweist, zwischen denen die Führungsschiene (2) angeordnet ist, wobei an der Führungsschiene (2) und an den beiden Schenkeln (10) des Führungswagens (1) Lagerflächen (6, 12) und von den Lagerflächen (5, 6, 11, 12) gebildete Drucktaschen (13, 14) gebildet sind, wobei der Rücken (9) an seiner von der Führungsschiene (2) abgewandten Seite eine Aufspannfläche (8) zum Aufspannen beispielsweise eines Maschinenteils (17) aufweist, wobei die Aufspannfläche (8) zu beiden Seiten der Längsmittelachse des Führungswagens (1) mit je einer Aufspannleiste oder Aufspannkante (15) versehen ist, zwischen denen die Aufspannfläche (8) abgesenkt oder in Längsrichtung der Führungsschiene gesehen konkav gewölbt ist, **dadurch gekennzeichnet, dass** der Rücken (9) des Führungswagens (1) um eine zu der Längsmittelachse des Führungswagens (1) parallele Achse biegbar ist, wobei bei gebogenem Rücken (9) ein Abstand der freien Enden der Schenkel (10) zueinander kleiner ist als vor dem Biegen des Rückens (9).

2. Hydrostatische Profilschienenführung nach Anspruch 1, bei der der Rücken (9) des Führungswagens (1) mit mehreren hintereinander angeordneten Gewindebohrungen (16) oder aus der Ebenen der Aufspannfläche (8) vorstehenden Gewindeschäften versehen ist, um das Maschinenteil (17) mit dem Führungswagen (1) zu verschrauben.

3. Hydrostatische Profilschienenführung nach einem oder mehreren der vorangegangenen Ansprüche, bei der entlang der beiden Längsseiten des Führungswagens (1) je eine Aufspannleiste oder Aufspannkante (15) für das Maschinenteil (17) vorgesehen ist, wobei das Maschinenteil (17) mit einer ebenen Auflagerfläche zur Auflage auf die Aufspannkanten (15) des Führungswagens (1) versehen ist.

4. Hydrostatische Profilschienenführung nach Anspruch 1, bei der die beiden Aufspannleisten oder -kanten (15) in einer gemeinsamen Ebene E2 angeordnet sind, wobei ein Abstand (h) zwischen der Ebene E2 und einer zu der Ebene E2 parallel angeordneten Ebene E1 eingestellt ist, wobei die konkav gewölbte Aufspannfläche (8) oder die zwischen den Aufspannleisten oder -kanten (15) abgesenkte Aufspannfläche (8) die Ebene E1 tangiert.

5. Hydrostatische Profilschienenführung nach Anspruch 1, bei der unter einem Einebnen der konkav gewölbten Aufspannfläche (8) die beiden Schenkel (10) mit ihren freien Schenkelenden aufeinander zu schwenken.

## Claims

1. Hydrostatic profile rail guide, having a guide carriage (1) which can be mounted hydrostatically on a guide rail (2), the guide carriage having a back (9) and two limbs (10) which adjoin the back (9) and between which the guide rail (2) is arranged, bearing faces (6, 12) and pressure pockets (13, 14) which are formed by the bearing faces (5, 6, 11, 12) being formed on the guide rail (2) and on the two limbs (10) of the guide carriage (1), the back (9) having, on its side which faces away from the guide rail (2), a clamping face (8) for clamping, for example, a machine part (17), the clamping face (8) being provided on both sides of the longitudinal centre axis of the guide carriage (1) with in each case one clamping strip or clamping edge (15), between which the clamping face (8) is recessed or, as viewed in the longitudinal direction of the guide rail, is curved concavely, **characterized in that** the back (9) of the guide carriage (1) can be bent about an axis which is parallel to the longitudinal centre axis of the guide carriage (1), a spacing of the free ends of the limbs (10) from one another in the case of a bent back (9) being smaller than before the bending of the back (9).

2. Hydrostatic profile rail guide according to Claim 1, in which the back (9) of the guide carriage (1) is provided with a plurality of threaded holes (16) which are arranged behind one another or threaded shanks which project out of the planes of the clamping face (8), in order to screw the machine part (17) to the guide carriage (1).

3. Hydrostatic profile rail guide according to one or more of the preceding claims, in which in each case one clamping strip or clamping edge (15) for the machine part (17) is provided along the two longitudinal sides of the guide carriage (1), the machine part (17) being provided with a flat support face for supporting on the clamping edges (15) of the guide carriage (1).

4. Hydrostatic profile rail guide according to Claim 1, in which the clamping strips or edges (15) are arranged in a common plane E2, a spacing (h) being set between the plane E2 and a plane E1 which is arranged parallel to the plane E2, the concavely curved clamping face (8) or the clamping face (8) which is recessed between the clamping strips or edges (15) being tangent on the plane E1.

5. Hydrostatic profile rail guide according to Claim 1, in which, with levelling of the concavely curved clamping face (8), the two limbs (10) pivot towards one another with their free limb ends.

## Revendications

1. Guide hydrostatique de rails profilés, comprenant un chariot de guidage (1) qui peut être supporté de manière hydrostatique sur un rail de guidage (2), le chariot de guidage présentant un dos (9) et deux branches (10) se raccordant au dos (9), entre lesquelles le rail de guidage (2) est disposé, des surfaces d'appui (6, 12) et des cavités de pression (13, 14) formées par les surfaces d'appui (5, 6, 11, 12) étant formées sur le rail de guidage (2) et sur les deux branches (10) du chariot de guidage (1), le dos (9) présentant, au niveau de son côté opposé au rail de guidage (2), une surface de fixation (8) pour fixer par exemple une pièce de machine (17), la surface de fixation (8) étant pourvue des deux côtés de l'axe médian longitudinal du chariot de guidage (1) d'une baguette de fixation ou d'une arête de fixation (15), entre lesquelles arêtes de fixation la surface de fixation (8) est renfoncée ou courbée de manière concave, vu dans la direction longitudinale du rail de guidage, **caractérisé en ce que** le dos (9) du chariot de guidage (1) peut être cintré autour d'un axe parallèle à l'axe médian longitudinal du chariot de guidage (1), une distance des extrémités libres des branches (10) les unes des autres, lorsque le dos (9) est cintré, étant inférieure à cette distance avant le cintrage du dos (9).

2. Guide hydrostatique de rails profilés selon la revendication 1, dans lequel le dos (9) du chariot de guidage (1) est pourvu de plusieurs alésages filetés (16) disposés les uns derrière les autres ou de tiges filetées saillant hors du plan de la surface de fixation (8), afin de visser la pièce de machine (17) au chariot de guidage (1).

3. Guide hydrostatique de rails profilés selon l'une quelconque ou plusieurs des revendications précédentes, dans lequel le long des deux côtés longitudinaux du chariot de guidage (1) est prévue à chaque fois une baguette de fixation ou une arête de fixation (15) pour la pièce de machine (17), la pièce de machine (17) étant pourvue d'une surface d' appui plane pour l'appui sur les arêtes de fixation (15) du chariot de guidage (1).

4. Guide hydrostatique de rails profilés selon la revendication 1, dans lequel les deux baguettes ou arêtes de fixation (15) sont disposées dans un plan commun E2, une distance (h) entre le plan E2 et un plan E1 disposé parallèlement au plan E2 étant ajustée, la surface de fixation (8) de courbure concave ou la surface de fixation (8) renfoncée entre les baguettes ou arêtes de fixation (15) étant tangente au plan E1.

5. Guide hydrostatique de rails profilés selon la revendication 1, dans lequel, sous un nivellement de la surface de fixation de courbure concave (8), les deux branches (10) peuvent pivoter l'une vers l'autre avec leurs extrémités de branches libres.
